# EUROPÄISCHE PATENTSCHRIFT

(11) **EP 1 224 652 B1**
(45) Veröffentlichungstag und Bekanntmachung des Hinweises auf die Patenterteilung: **21.07.2010**
(21) Anmeldenummer: 00975869.9
(22) Anmeldetag: 16.10.2000
(51) Int. Cl.: G09F 9/35, G06F 1/16, A47B 19/00

(54) **PULT**
LECTERN
PUPITRE

(30) Priorität: 25.10.1999 DE 19951309
(43) Veröffentlichungstag der Anmeldung: 24.07.2002
(73) Patentinhaber: Iglseder, Heinrich, 31552 Rodenberg/Deister (DE)
(72) Erfinder: IGLSEDER, Heinrich, 31552 Rodenberg (DE); REMMERS, Burkhard, 30171 Hannover (DE); THODE, Jürgen, 30171 Hannover (DE); STREITZ, Norbert, 64367 Mühltal-Traisa (DE); MÜLLER-TOMFELDE, Christian, 64367 Mühltal-Trautheim (DE); ENGLISCH, Michael, 22299 Hamburg (DE)
(74) Vertreter: Möller, Friedrich
(86) Internationale Anmeldenummer: PCT/EP2000/010173
(87) Internationale Veröffentlichungsnummer: WO 2001/031615

(56) Entgegenhaltungen:
- EP-A- 0 604 719
- EP-A- 0 899 651
- US-A- 5 760 323
- US-A- 5 995 179

## Beschreibung

Die Erfindung betrifft ein Pult.

Pulte sind in der Praxis insbesondere als sogenannte Stehpulte bekannt, die ein Arbeiten im Stehen ermöglichen. Das Pult dient dabei üblicherweise zur Ablage von Gegenständen und Druckschriften.

Aus der US-A-5 760 323 ist ein Notenpult mit Flachbildschirm bekannt. Dieses Dokument zeigt und ein Ausführungsbeispiel, wobei mehrere Notenpülte mit einem Zentralrechner vernetzt sind.

In der US-A-5 995 179 wird eine LCD-Vorrichtung beschrieben., die aus einer Vielzahl miteinander koppelbarer LCD-Module besteht.

Der Erfindung liegt die Aufgabe zugrunde, die Anwendungsmöglichkeiten eines Pults weiterzubilden.

Erfindungsgemäß wird diese Aufgabe durch die Merkmale des Anspruchs 1 gelöst, in dem das Pult mit einem Flachbildschirm und Kopplungsmitteln ausgestattet ist, wobei Flachbildschirme mehrerer Pulte miteinander zur Bildung eines Gesamtbildschirms koppelbar sind. Die Kopplungsmittel sind dabei derart ausgebildet, dass für die Zentraleinheiten erkennbar ist, welche Kantenbereiche der Flachbildschirme miteinander verbunden sind.

In einem bevorzugten Ausführungsbeispiel ist der Flachbildschirm als sensitiver, interagierender Bildschirm ausgebildet, so dass über den Bildschirm unmittelbar auf die dargestellten Informationen eingewirkt werden kann.

Zur Gewährleistung einer möglichst flexiblen Handhabung des Pults ist dieses verfahrbar ausgebildet und kann dadurch auf einfache Weise mit anderen Pulten zusammengestellt werden. Das Pult weist zweckmäßigerweise eine Zentraleinheit auf, die als Rechner ausgebildet ist, der mit dem Flachbildschirm in Verbindung steht. Bei einer zusätzlich eingebauten Energieversorgung ist das Pult zudem über einen gewissen Zeitabschnitt völlig autark nutzbar.

In einer besonderen Ausgestaltung ist der Bildschirm in der Höhe und Neigung beliebig einstellbar, so daß sowohl im Sitzen als auch im Stehen gearbeitet werden kann. Zudem besteht hierdurch die Möglichkeit, bei einer Anordnung mit mehreren Pulten auch geneigte Gesamtbildschirmflächen zu erzeugen.

Weitere Ausgestaltungen der Erfindung sind Gegenstand der Unteransprüche.

Weitere Vorteile und Ausgestaltungen der Erfindung werden anhand der Beschreibung und der Zeichnung näher erläutert.

In der Zeichnung zeigen
- Fig.1: eine Seitenansicht eines Pults in einer er- sten Gebrauchsstellung,
- Fig.2: eine dreidimensionale Darstellung des Pults in einer zweiten Gebrauchsstellung,
- Fig.3: eine dreidimensionale Darstellung einer An- ordnung mit zwei Pulten in einer dritten Ge- brauchsstellung,
- Fig.4: eine dreidimensionale Darstellung einer An- ordnung mit zwei Pulten in einer vierten Ge- brauchsstellung, und
- Fig.5: eine dreidimensionale Darstellung einer An- ordnung mit vier Pulten.

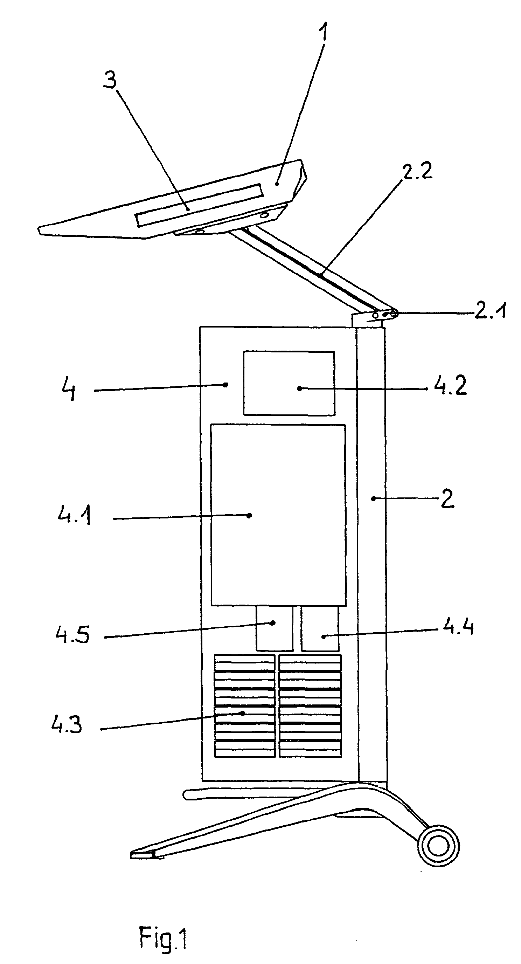

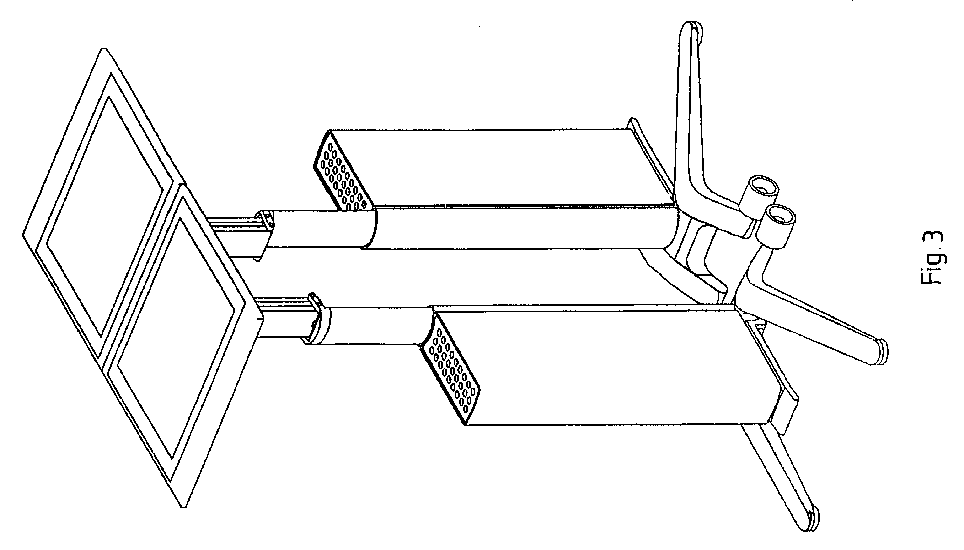

Das in Fig. 1 dargestellte Pult besteht im wesentlichen aus einem Flachbildschirm 1, der an einem Halterungsgestell befestigt ist. Das Pult weist ferner Kopplungsmittel 3 auf, wodurch Flachbildschirme mehrerer Pulte miteinander zur Bildung eines Gesamtbildschirms koppelbar sind (siehe Fig.3 bis 5). Die Kopplungsmittel 3 sind im dargestellten Ausführungsbeispiel im Bereich des Flachbildschirms 1 vorgesehen. Es sind jedoch auch andere Orte denkbar, die gewährleisten, daß ein benachbarter, anzukoppelnder Flachbildschirm erkannt wird und die Kopplung ggf. zum Daten- und Informationsaustausch geeignet ist.

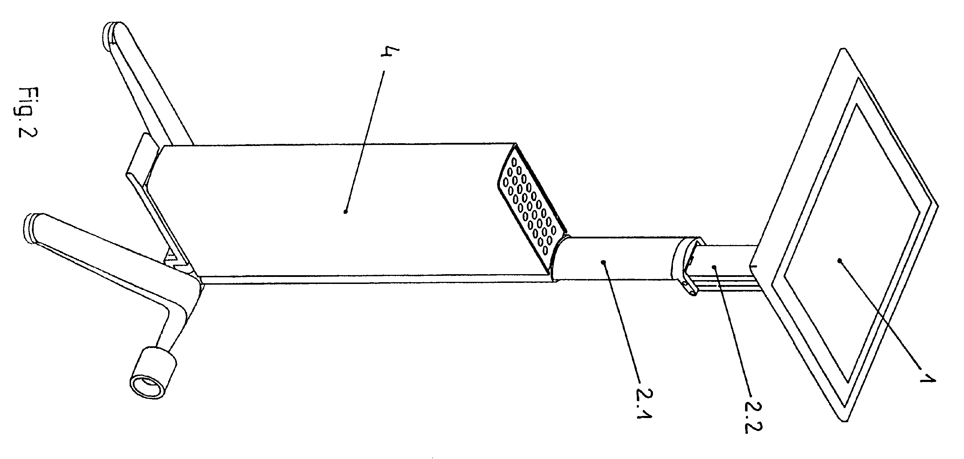

Wie insbesondere die Fig.1 und 2 erkennen lassen, sind Mittel vorgesehen, um den Flachbildschirm 1 in der Höhe und/oder Neigung zu verstellen. Außerdem kann der Flachbildschirm drehbar und/oder schwenkbar um eine oder mehrere Achsen gehaltert sein. Das Halterungsgestell 2 weist zu diesem Zweck eine Teleskopanordnung mit einer ersten und zweiten Teleskopstange 2.1 und 2.2 auf. Der Flachbildschirm 1 ist zudem gelenkig an der zweiten Teleskopstange 2.2 gehaltert. Die mit dem Flachbildschirm 1 verbundene zweite Teleskopstange 2.2 ist zudem schwenkbar an der ersten Teleskopstange 2.1 gehaltert. Die Teleskopanordnung ist zweckmäßigerweise zum stufenlosen Verstellen ausgebildet und ermöglicht daher eine sehr individuelle Einstellung auf die Bedürfnisse des Benutzers. Das Halterungsgestell und die Höhenverstellung durch die Teleskopanordnung ist so ausgelegt, daß sowohl ein Arbeiten im Stehen als auch im Sitzen ermöglicht wird. Der Flachbildschirm 1 kann sowohl horizontal (Fig.2) als auch geneigt (Fig.1) ausgerichtet werden.

Alle weiteren technischen Komponenten, insbesondere eine Zentraleinheit 4 mit einem Rechner, sind möglichst kompakt am Halterungsgestell 2 angebracht.

Das Halterungsgestell stützt sich über vier Füße auf einer Standfläche ab, wobei zwei Füße mit Rollen ausgebildet sind und dadurch eine einfache Verfahrbarkeit des Pultes gewährleistet wird. Die Zentraleinheit 4 weist neben dem Rechner 4.1 zweckmäßigerweise auch eine geeignete Energieversorgung 4.2 auf, die beispielsweise durch einen Akku gebildet wird. Dadurch ist das Pult zumindest für einen gewissen Zeitraum völlig autark verwendbar, so daß auf etwaige Kabelverbindungen verzichtet werden kann. Um einen schnellen Überblick über den Betriebs- und/oder Ladezustand der Zentraleinheit zu bekommen, kann eine optische Anzeige 4.3 vorgesehen werden.

Um das Pult möglichst vielseitig einsetzen zu können, ist dieses ferner mit einer Sendeeinheit 4.4 ausgestattet, um Daten an ein anderes System, beispielsweise ein anderes Pult, eine Projektionswand oder einen anderen Rechner zu übermitteln. Um selbst Daten empfangen zu können, kann eine Empfangseinheit 4.5 vorgesehen werden.

Der Flachbildschirm ist als sensitiver, interagierender Bildschirm ausgebildet. Die sensitive Oberfläche kann dabei beispielsweise berührungssensitiv, drucksensitiv, wärmesensitiv, bewegungssensitiv, ortsauflösend oder auch widerstandssensitiv ausgebildet sein. Für den Benutzer besteht somit die Möglichkeit, auf die am Bildschirm dargestellten Daten unmittelbar über dem Bildschirm einzugreifen.

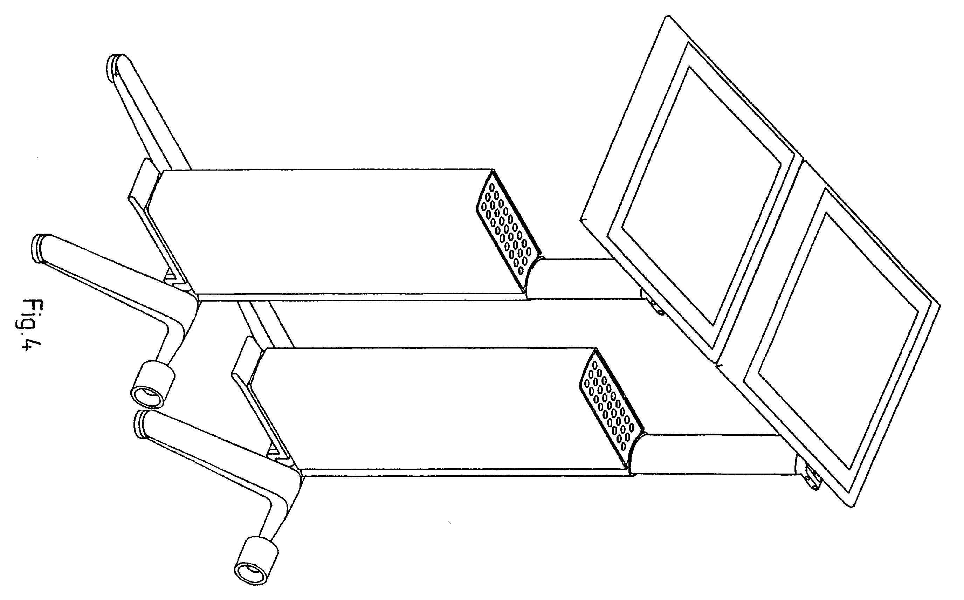

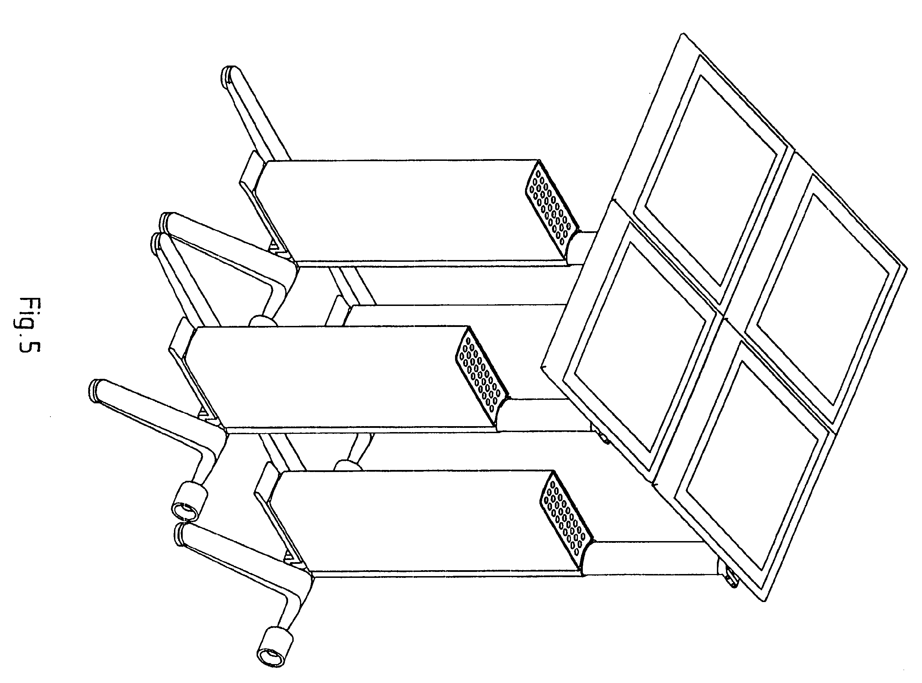

Die Besonderheit des Pults besteht nun darin, daß es nicht nur als einzelnes Pult verwendbar ist, sondern die Möglichkeit besteht, die Flachbildschirme mehrerer Pulte zu einem Gesamtbildschirm zu kombinieren. Beispielhaft sind in den Fig.3 bis 5 Anordnungen mit zwei bzw. vier Pulten gezeigt. Durch die Einstellbarkeit der Flachbildschirme in Höhe und Neigung lassen sich somit aus mehreren Flachbildschirmen bestehende geneigte Gesamtbildschirme erzeugen (Fig.4 und 5). Zur Bildung eines Gesamtbildschirms werden zwei oder mehrere Pulte so aneinandergestellt, daß sich die Bildschirme berühren bzw. fast berühren und die Bildschirme in einer Ebene angeordnet sind. Für manche Anwendungsfälle sind jedoch auch Zusammenstellungen denkbar, bei denen die Bildschirme nicht alle in einer Ebene angeordnet sind.

Um die einzelnen Flachbildschirme als Gesamtbildschirm nutzen zu können, sind Kopplungsmittel vorgesehen, wobei die Kopplung wahlweise auf mechanischem, elektrischem, optischem, akustischem oder magnetischem Wege erfolgen kann. Selbstverständlich sind auch Kombinationen der oben beschriebenen Möglichkeiten, beispielsweise eine elektromagnetische Kopplung denkbar. Letztendlich muß gewährleistet sein, daß die mit den jeweiligen Flachbildschirmen einer Anordnung in Verbindung stehenden Zentraleinheiten (Rechner) wissen, welche Flachbildschirme miteinander verbunden sind. Die Kopplungsmittel müssen außerdem so ausgestaltet sein, daß für die jeweiligen Zentraleinheiten erkennbar ist, welche Kantenbereiche der Flachbildschirme miteinander verbunden sind, d.h. es muß erkennbar sein, ob beispielsweise zwei Flachbildschirme seitlich nebeneinander angeordnet sind oder im Bereich der oberen oder unteren Kanten des Flachbildschirms aneinandergrenzen.

Im Rahmen der Erfindung besteht selbstverständlich auch die Möglichkeit, die Kopplungsmittel durch Software zu realisieren, indem beispielsweise über die einzelnen Bildschirme einer Anordnung die angekoppelten Pulte eingegeben werden.

Indem man zwei oder mehrere Pulte zu einer größeren Einheit "verschmelzen" kann, wird auf diese Weise die spontane Zusammenarbeit an einer gemeinsamen interaktiven Arbeitsfläche ermöglicht. Dadurch gelingt es, den abstrakten Schritt von der Arbeitsteilung zur Teamvernetzung im Wortsinne begreifbar zu machen.

Durch den sensitiven, interagierenden Flachbildschirm ist das Arbeiten auf "digitalem Papier" mit einem Stift möglich.

Durch die autarke und mobile Ausbildung der Pulte können diese entsprechend der jeweiligen Bedürfnisse schnell und einfach arrangiert werden. So besteht insbesondere die Möglichkeit, das an den Pulten zunächst jeweils nur eine Person arbeitet und die Ergebnisse dann in der Gruppe durch Zusammenstellen mehrerer Pulte diskutiert werden können.

## Patentansprüche

1. Pult mit einem Flachbildschirm (1), **gekennzeichnet durch** Kopplungsmittel (3), wodurch Flachbildschirme (1) mehrerer Pulte miteinander zur Bildung eines Gesamtbildschirms koppelbar sind, wobei das jeweilige Pult eine Zentraleinheit (4) aufweist, die mit dem Flachbildschirm (1) des Pults in Verbindung steht, und wobei die Kopplungsmittel derart ausgestaltet sind, dass für die jeweilige Zentraleinheit (4) erkennbar ist, welche Kantenbereiche der Flachbildschirme (1) miteinander verbunden sind.

2. Pult nach Anspruch 1, **dadurch gekennzeichnet, dass** die Kopplungsmittel (3) zum berührungslosen Datenaustausch ausgebildet sind.

3. Pult nach einem oder mehreren der vorhergehenden Ansprüche, **dadurch gekennzeichnet, dass** Mittel (2.1, 2.2) zur Verstellung von Höhe und/oder Neigung des Flachbildschirms vorgesehen sind.

4. Pult nach einem oder mehreren der vorhergehenden Ansprüche, **dadurch gekennzeichnet, dass** die Zentraleinheit (4) ein Rechner (4.1) ist, der mit dem Flachbildschirm in Verbindung steht.

5. Pult nach einem oder mehreren der vorhergehenden Ansprüche, **dadurch gekennzeichnet, dass** das Pult verfahrbar ausgebildet ist.

6. Pult nach einem oder mehreren der vorhergehenden Ansprüche, **dadurch gekennzeichnet, dass** der Flachbildschirm (1) als sensitiver, interagierender Bildschirm ausgebildet ist.

7. Pult nach einem oder mehreren der vorhergehenden Ansprüche, **dadurch gekennzeichnet, dass** zur Verstellung des Flachbildschirms (1) eine Teleskopanordnung mit wenigstens einer Teleskopstange (2.2) vorgesehen ist und der Flachbildschirm an der Teleskopstange gehaltert ist.

8. Pult nach Anspruch 7, **dadurch gekennzeichnet, dass** die Teleskopanordnung zwei Teleskopstangen aufweist, wobei die mit dem Flachbildschirme (1) verbundene Teleskopstange (2.2) verschiebbar und schwenkbar an der anderen Teleskopstange (2.1) gehaltert ist.

9. Pult nach einem oder mehreren der vorhergehenden Ansprüche, **dadurch gekennzeichnet, dass** die Kopplungsmittel zum Zwecke des Daten- und/oder Informationsaustausches ausgebildet sind.

10. Pult nach einem oder mehreren der vorhergehenden Ansprüche, **dadurch gekennzeichnet, dass** am Pult ferner eine Zentraleinheit (4), insbesondere ein Rechner (4.1), befestigt ist, die mit dem Flachbildschirm (1) in Verbindung steht, und ferner eine Energieversorgungseinheit (4.2) für die Zentraleinheit und den Flachbildschirme vorgesehen ist.

11. Pult nach einem oder mehreren der vorhergehenden Ansprüche, **dadurch gekennzeichnet, dass** das Pult ferner eine Sendeeinheit (4.4) zur Übertragung von Daten aufeist.

12. Pult nach einem oder mehreren der vorhergehenden Ansprüche, **dadurch gekennzeichnet, dass** das Pult ferner eine Empfangseinheit (4.5) zum Empfang von Daten aufweist.

13. Pult nach einem oder mehreren der vorhergehenden Ansprüche, **dadurch gekennzeichnet, dass** der Flachbildschirm drehbar und/oder schwenkbar um eine oder mehrere Achsen gehaltert ist.

## Claims

1. Lectern having a flat screen (1), **characterized by** coupling means (3) which can be used to couple flat screens (1) of a plurality of lecterns to one another to form a full screen, the respective lectern having a central processing unit (4) which is connected to the flat screen (1) of the lectern, and the coupling means being configured in such a manner that it is possible to discern, for the respective central processing unit (4), which edge regions of the flat screens (1) are connected to one another.

2. Lectern according to Claim 1, **characterized in that** the coupling means (3) are designed to contactlessly interchange data.

3. Lectern according to one or more of the preceding claims, **characterized in that** means (2.1, 2.2) for adjusting the height and/or inclination of the flat screen are provided.

4. Lectern according to one or more of the preceding claims, **characterized in that** the central processing unit (4) is a computer (4.1) which is connected to the flat screen.

5. Lectern according to one or more of the preceding claims, **characterized in that** the lectern can be moved.

6. Lectern according to one or more of the preceding claims, **characterized in that** the flat screen (1) is in the form of a sensitive, interactive screen.

7. Lectern according to one or more of the preceding claims, **characterized in that**, in order to adjust the flat screen (1), a telescopic arrangement having at least one telescopic rod (2.2) is provided and the flat screen is mounted on the telescopic rod.

8. Lectern according to Claim 7, **characterized in that** the telescopic arrangement has two telescopic rods, the telescopic rod (2.2) which is connected to the flat screen (1) being mounted on the other telescopic rod (2.1) in a displaceable and pivotable manner.

9. Lectern according to one or more of the preceding claims, **characterized in that** the coupling means are designed to interchange data and/or information.

10. Lectern according to one or more of the preceding claims, **characterized in that** a central processing unit (4), in particular a computer (4.1), is also fastened to the lectern and is connected to the flat screen (1), and a power supply unit (4.2) for the central processing unit and the flat screen is also provided.

11. Lectern according to one or more of the preceding claims, **characterized in that** the lectern also has a transmitting unit (4.4) for transmitting data.

12. Lectern according to one or more of the preceding claims, **characterized in that** the lectern also has a receiving unit (4.5) for receiving data.

13. Lectern according to one or more of the preceding claims, **characterized in that** the flat screen is mounted in such a manner that it can be rotated and/or pivoted about one or more axes.

## Revendications

1. Pupitre avec un écran plat (1), **caractérisé par** des moyens de couplage (3), sachant que les écrans plats (1) de plusieurs pupitres peuvent être couplés entre eux pour former un écran global, le pupitre respectif comportant une unité centrale (4) reliée à l'écran plat (1) du pupitre, et les moyens de couplage étant réalisés de telle sorte que pour l'unité centrale (4) respective, on peut voir quelles zones de bordure des écrans plats (1) sont reliées entre elles.

2. Pupitre selon la revendication 1, **caractérisé en ce que** les moyens de couplage (3) sont réalisés en vue de permettre un échange de données sans contact.

3. Pupitre selon l'une quelconque des revendications précédentes ou plusieurs d'entre elles, **caractérisé en ce que** les moyens (2.1, 2.2) sont prévus pour régler la hauteur et/ou l'inclinaison de l'écran plat.

4. Pupitre selon l'une quelconque des revendications précédentes ou plusieurs d'entre elles, **caractérisé en ce que** l'unité centrale (4) est un ordinateur (4.1) relié à l'écran plat.

5. Pupitre selon l'une quelconque des revendications précédentes ou plusieurs d'entre elles, **caractérisé en ce que** le pupitre est réalisé de façon à pouvoir être déplacé.

6. Pupitre selon l'une quelconque des revendications précédentes ou plusieurs d'entre elles, **caractérisé en ce que** l'écran plat (1) est réalisé sous la forme d'un écran tactile interactif.

7. Pupitre selon l'une quelconque des revendications précédentes ou plusieurs d'entre elles, **caractérisé en ce qu'**un agencement télescopique comprenant au moins une tige télescopique (2.2) est prévu pour régler l'écran plat (1) et que l'écran plat est maintenu contre la tige télescopique.

8. Pupitre selon la revendication 7, **caractérisé en ce que** l'agencement télescopique comporte deux tiges télescopiques, la tige télescopique (2.2) reliée à l'écran plat (1) étant maintenue de façon à pouvoir être déplacée et pivotée contre l'autre tige télescopique (2.1).

9. Pupitre selon l'une quelconque des revendications précédentes ou plusieurs d'entre elles, **caractérisé en ce que** les moyens de couplage sont réalisés en vue d'un échange de données et/ou d'informations.

10. Pupitre selon l'une quelconque des revendications précédentes ou plusieurs d'entre elles, **caractérisé en ce qu'**une unité centrale (4), notamment un ordinateur (4.1), est fixée au pupitre, ladite unité étant reliée à l'écran plat (1) et **en ce qu'**une unité d'alimentation en énergie (4.2) est en outre prévue pour l'unité centrale et l'écran plat.

11. Pupitre selon l'une quelconque des revendications précédentes ou plusieurs d'entre elles, **caractérisé en ce que** le pupitre comporte en outre une unité émettrice (4.4) pour émettre des données.

12. Pupitre selon l'une quelconque des revendications précédentes ou plusieurs d'entre elles, **caractérisé en ce que** le pupitre comporte en outre une unité réceptrice (4.5) pour recevoir des données.

13. Pupitre selon l'une quelconque des revendications précédentes ou plusieurs d'entre elles, **caractérisé en ce que** l'écran plat est maintenu de façon à pouvoir tourner et/ou pivoter autour d'un ou de plusieurs axes.
